**Europäisches Patentamt**

**European Patent Office**

**Office européen des brevets**

(11) Numéro de publication: **0 027 074**
**B1**

(12) **FASCICULE DE BREVET EUROPEEN**

(45) Date de publication du fascicule du brevet: **02.01.85**

(51) Int. Cl.⁴: **G 06 K 21/00,** G 06 K 19/06

(21) Numéro de dépôt: **80401366.2**

(22) Date de dépôt: **25.09.80**

(54) **Système de recherche d'objets classés de façon aléatoire.**

(30) Priorité: **05.10.79 FR 7924818**

(43) Date de publication de la demande:
**15.04.81 Bulletin 81/15**

(45) Mention de la délivrance du brevet:
**02.01.85 Bulletin 85/01**

(84) Etats contractants désignés:
**AT BE CH DE GB IT LI NL SE**

(56) Documents cités:
**DE-C- 690 244**
**FR-A-2 359 464**
**US-A-1 650 058**
**US-A-3 416 535**
**US-A-3 702 464**
**US-A-4 004 133**

(73) Titulaire: **Kott, Jacques**
**61, rue de Bagnolet**
**F-75020 Paris (FR)**

(72) Inventeur: **Kott, Jacques**
**61, rue de Bagnolet**
**F-75020 Paris (FR)**

(74) Mandataire: **Ruellan-Lemonnier, Brigitte et al**
**Cabinet LEMONNIER 4, Boulevard Saint Denis**
**F-75010 Paris (FR)**

Courier Press, Leamington Spa, England.

## Description

La présente invention concerne un système de recherche d'objets classés de façon aléatoire. En particulier, la présente invention concerne un système qui permet de retrouver immédiatement soit un document tel que fiche, microfiche, dossier, livre ou similaire soit tout autre objet tel que pièces détachées, médicaments ou autres qui a été rangé de façon aléatoire dans un dispositif de rangement sans prendre en compte la codification adoptée pour classer le document.

Habituellement pour faciliter la recherche des objets ou documents, ceux-ci sont munis d'un code numérique ou alphanumérique correspondant à la classification adoptée par le service utilisateur et sont rangés en fonction de ce code dans un dispositif de rangement tel que rayonnage, armoire, fichier, tiroir ou similaires fonction de l'objet à classer. Pour pouvoir retrouver rapidement l'objet recherché, il est nécessaire que l'objet ait été rangé à l'emplacement déterminé par son code, c'est-à-dire à un emplacement fixe. Or, en général, le rangement des objets s'effectue manuellement ce qui entraîne des risques d'erreurs, et il en résulte une perte de temps importante lors de la recherche ultérieure de l'objet. Cette perte de temps est d'autant plus préjudiciable que le nombre d'objets classés est important. Pour augmenter la rapidité de la recherche d'un objet, on a proposé de munir les matériels de rangement de divers dispositifs tels que dispositifs de rotation et de pivotement, dispositifs de sélection par indexation ou similaires. Toutefois, aucun des systèmes connus ne permet de retrouver facilement et immédiatement un objet mal classé. On a aussi proposé des systèmes de recherche de documents classés de façon aléatoire tels que des bacs à fiches munis d'un dispositif de détection électrique ou des systèmes mécaniques pour tiroirs à classeurs. Toutefois, ces systèmes ne s'appliquent qu'à un type de documents spécifiques et sont d'un emploi limité.

DE—A—690 244 décrit un système de recherche de fiches classées de façon aléatoire. Ce système se compose d'un bac à fiches, d'un ensemble de fiches munies d'une série de contacts électriques qui forment un code et d'un dispositif de sélection comportant aussi des contacts déplaçables pour former le code de la fiche recherchée. Dans ce système, pour trouver la fiche correspondant au code sélectionné, le dispositif de sélection doit être déplacé le long du bac. Il en résulte plusieurs inconvénients:

— le dispositif de sélection est forcément solidarisé avec le bac puisqu'il doit venir en contact avec l'objet à détecter. Ainsi, ce système de recherche ne peut s'appliquer qu'à certains types de dispositifs de classement. Il est difficile de l'appliquer aux armoires contenant des dossiers suspendus ou au classement de pièces détachées.

— le recherche est forcément une recherche séquentielle qui est longue.

US—A—3 704 646 concerne une carte de crédit et enseigne simplement qu'il est possible de munir celle-ci d'une mémoire à l'état solide pour emmagasiner des informations. Le brevet ne décrit aucun moyen de repérage de la carte de crédit.

US—A—3 416 535 concerne un appareil de sélection comportant une pluralité de barres de contact qui coopèrent avec deux contacts alimentant une bobine prévus sur chaque carte. L'alimentation électrique de deux barres détermine la création d'un champ par la bobine des seules cartes dont les contacts coopèrent avec ces deux barres et ces cartes sont déplacées par un champ magnétique opposé créé dans le réceptacle contenant les cartes. Ce dispositif présente les mêmes inconvénients que celui décrit dans DE—A—690 244 avec en plus la présence de tout un ensemble de barres de contact.

La présente invention a pour but de remédier à ces inconvénients en fournissant un système de recherche d'objets classés de façon aléatoire qui permet de retrouver facilement et rapidement un objet classé dans un dispositif de rangement indépendamment de son code de classification.

La présente invention a pour objet un système de recherche d'objets classés de façon aléatoire, lesdits objets étant munis d'un code de classification, caractérisé en ce qu'il comporte un dispositif d'adressage indépendant constitué par un dispositif d'entrée de données destiné à entrer le code de l'objet recherché par un dispositif émetteur adressant à tous les objets simultanément un signal correspondant au code de l'objet recherché et au moins un dispositif de repérage associé à chaque objet, chaque dispositif de repérage étant constitué par un dispositif mémoire dans lequel a été emmagasinée l'adresse de l'objet et par un dispositif de comparaison pour comparer l'adresse contenue à partir du signal émis par le dispositif d'adressage et émettre un signal commandant un dispositif de détection solidaire de l'objet recherché. Ainsi, le dispositif de repérage peut comporter en outre un dispositif récepteur susceptible de transformer le signal provenant du dispositif de commande en un code acceptable par le dispositif de comparaison. Le dispositif mémoire peut être un dispositif mémoire programmable ou un dispositif mémoire seulement lu (ROM). Un dispositif mémoire programmable permet à l'utilisateur de donner à chaque objet, c'est-à-dire à chaque dispositif de repérage le code de son choix. Un dispositif mémoire seulement lue sera utilisé, de préférence, dans le cas où un pré-adressage d'un ensemble de dispositifs de repérage est possible.

Selon un mode de réalisation préférentiel de la présente invention, le dispositif de commande est constitué par un dispositif d'entrée de données destiné à entrer le code ou adresse de l'objet recherché ainsi que les fonctions à réaliser et par un dispositif émetteur destiné à envoyer vers les dispositifs de repérage un signal fonction du code ou adresse et des fonctions entrés. Le dispositif d'entrée de données peut être constitué par un dispositif d'entrée de données du type clavier tandis que le dispositif émetteur est constitué par un dispositif de codage. Toutefois, pour faciliter l'adaptation du système de recherche d'objets classés de façon aléatoire aux codifications déjà existantes des services utilisateurs, le dispositif de commande peut être constitué par une unité programmable qui permet d'associer à chaque adresse d'objets la codification des services utilisateurs. De plus, pour réduire l'encombrement du dispositif de commande et faciliter son utilisation, celui-ci peut être un dispositif du type télécommande.

D'autre part, le dispositif de détection solidaire de l'objet est, de préférence, constitué par un dispositif de visualisation tel qu'une diode électroluminescente ou similaire. Toutefois, tout dispositif de détection directement perceptible par l'homme peut être envisagé.

Selon une autre caractéristique de la présente invention, le dispositif de commande comporte un dispositif de marquage de type connu permettant d'inscrire un code ou adresse dans le dispositif de repérage d'un nouvel objet à classer.

Selon encore une autre caractéristique de la présente invention, le dispositif de commande est connecté à un dispositif mémoire dans lequel est emmagasiné une table de correspondance code utilisateur/adresse de l'objet pour permettre la recherche de l'objet à partir du code utilisateur.

D'autres caractéristiques et avantages de la présente invention apparaîtront à la lecture de la description de divers modes de réalisation de la présente invention faite avec référence aux dessins ci-annexés dans lesquels:

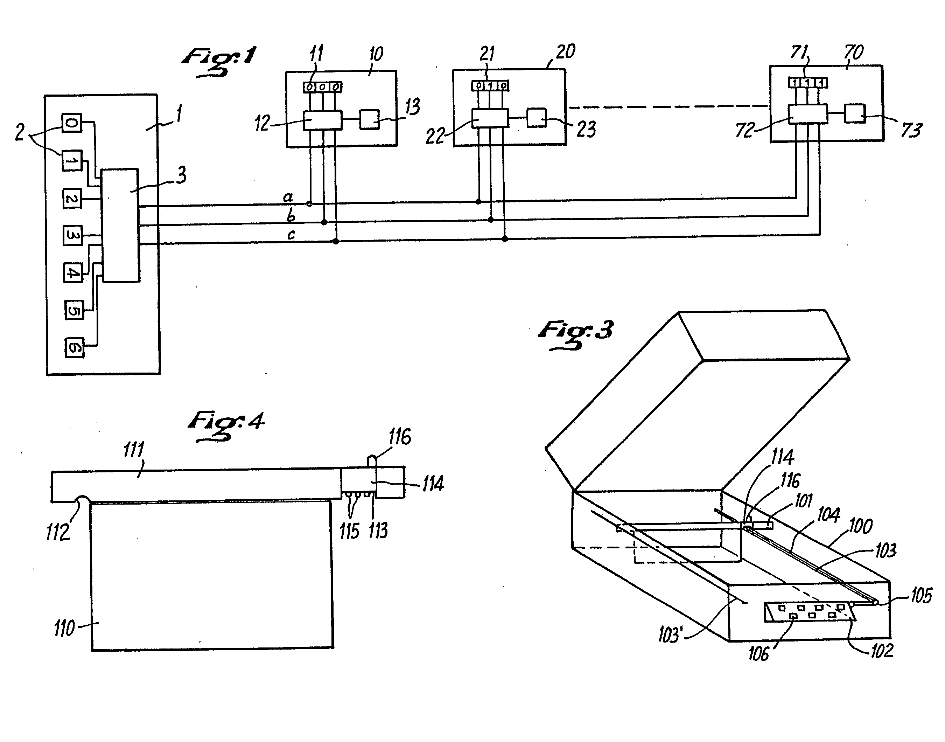

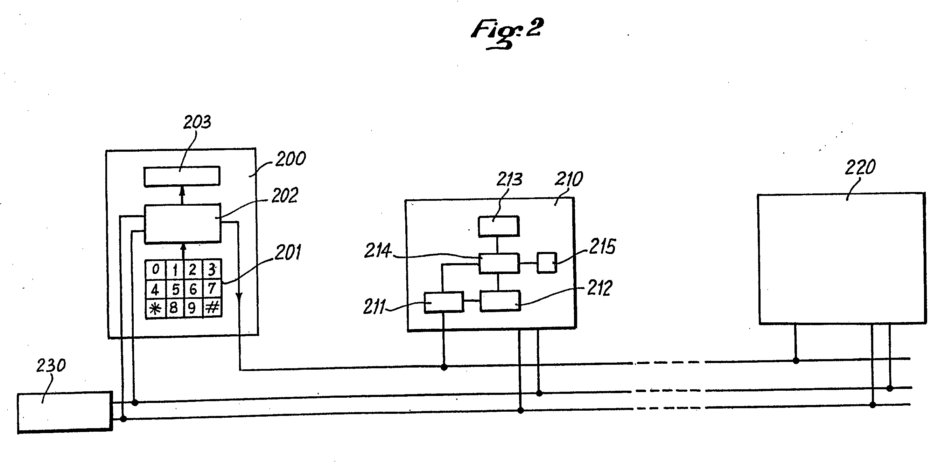

La figure 1 représente un schéma sous forme de blocs simplifié du circuit électrique d'un système de recherche d'objets classés de façon aléatoire conforme à un premier mode de réalisation; la figure 2 représente un schéma sous forme de blocs d'un autre mode de réalisation du circuit électrique d'un système de recherche d'objets classés de façon aléatoire; la figure 3 représente une vue en perspective d'un fichier pour microfiches ou fiches muni d'un système de recherche d'objets classés de façon aléatoire conforme à la présente invention, et la figure 4 représente une pochette pour fiche ou microfiche munie du dispositif de repérage de la présente invention.

La figure 1 représente le schéma électrique d'un premier mode de réalisation d'un système de recherche d'objets classés de façon aléatoire conforme à la présente invention. Dans un but de simplification, le système permet uniquement la recherche de sept objets, toutefois il est évident pour l'homme de l'art que ce système peut s'adapter très facilement à un nombre très important d'objets. Conformément à la présente invention, le système de recherche comporte un dispositif de commande 1 et sept dispositifs de repérages 10, 20...70. Le dispositif de commande est constitué dans le présent cas, d'une simple unité d'entrée de données formée par un clavier 2 à sept touches et d'une unité de codage 3, chaque touche étant connectée à l'unité de codage de manière à émettre un signal codé binaire correspondant à la touche enfoncée. Le signal codé binaire est envoyé sur une série de lignes conductrices a b c (trois dans le mode de réalisation représenté) sur lesquelles sont connectés de manière amovible les dispositifs de repérage 10, 20...70. Chaque dispositif de repérage comporte un dispositif mémoire 11, 21...71 qui est constitué, dans le mode de réalisation représenté par un registre à trois positions binaires dans lequel a été emmagasiné un code ou adresse, à savoir le code 000 pour le dispositif mémoire 11, le code 010 pour le dispositif mémoire 21 et le code 111 pour le dispositif mémoire 71. Chaque dispositif mémoire est connecté à un dispositif de comparaison 12, 22...72. Le dispositif de comparaison effectue une comparaison entre le code contenu dans le dispositif mémoire du dispositif de repérage et le code correspondant au signal émis par le dispositif de commande 1. Si les deux codes sont équivalents, le dispositif de comparaison émet un signal vers l'un des dispositifs de détection 13, 23...73, ce qui permet de retrouver le document recherché. Ainsi, par exemple, si l'utilisateur enfonce la touche 2, le code 010 est émis sur les lignes a b c. Or ce code correspond au code 010 emmagasiné dans le dispositif mémoire 21 du dispositif de repérage 20. De ce fait, le système de détection 23 permet de retrouver le document codifié par 2 quelque soit l'endroit où a été classé ce document.

La figure 2 représente le schéma électrique du système de recherche d'objets classés de façon aléatoire réalisé par l'inventeur et utilisé dans le cas de dossiers suspendus. Ce système est constitué comme le système de la figure 1 par un dispositif de commande 200 et par plusieurs dispositifs de repérage parmi lesquels seuls les deux dispositifs de repérage 210 et 220 ont été représentés pour simplifier le dessin. La mise sous tension du dispositif de commande 200 et des divers dispositifs de repérage 210, 220,...est réalisée par une alimentation 230 qui est connectée respectivement par deux fils conducteurs au dispositif de commande et aux différents dispositifs de repérage. On décrira maintenant plus en détail la constitution du dispositif de commande et des dispositifs de repérage associés à chaque objet à rechercher. Le dispositif de commande 200 comporte un dispositif d'entrée de données constitué par un clavier de 12 touches 201 comportant dix touches numériques pour entrer un code numérique et deux touches de fonction utilisées respectivement pour l'exécution d'une recherche ou pour la répétition à savoir une nouvelle émission du code entré, la touche numérique zéro étant de plus utilisée comme touche de remise à zéro du système. Le clavier 201 est connecté à un microprocesseur 202 destiné à traiter les données entrées par le clavier 201 et à émettre par l'intermédiaire d'une ligne conductrice vers les divers dispositifs de repérage un signal fonction des données entrées. Le microprocesseur 202 est relié à un dispositif d'affichage 203 permettant d'afficher et, en conséquence, de vérifier le code numérique entré par le clavier. Le microprocesseur 202 est en fait constitué par un microprocesseur proprement dit, par une mémoire contenant les programmes des différents travaux à exécuter tels qu'affichage, émission, etc et par des circuits décodeurs pour décoder les données émises par le clavier 201 ou vers le dispositif d'affichage 203. D'autre part, chaque dispositif de repérage associé à un objet est constitué, comme représenté pour le dispositif de repérage 210, par un analyseur 211 destiné à analyser le signal émis par le dispositif de commande, par un traducteur 212 connecté à l'analyseur destiné à fournir à partir du signal émis par le dispositif de commande un code correspondant au code recherché, par une mémoire 213 comportant le code spécifique de l'objet, par un comparateur 214 connecté respectivement au traducteur et à la mémoire, comparateur destiné à fournir un signal de comparaison lorsque le code spécifique à l'objet est égal au code recherché, et par un voyant lumineux 215 allumé par le signal de comparaison. En fait, ce système fonctionne de manière semblable au système décrit succinctement avec référence à la figure 1. L'utilisation d'un microprocesseur dans le dispositif de commande permet d'utiliser des codes à plusieurs chiffres. D'autre part, le dispositif d'affichage 203 permet de vérifier que le code entré par le clavier correspond bien au code recherché.

On décrira maintenant avec référence aux figures 3 et 4, l'application d'un système de recherche d'objets classés de façon aléatoire du type ci-dessus à un fichier pour fiches ou microfiches. Le système se compose d'un bac à fiches 100, d'un ensemble de pochettes pour fiche ou microfiche 101 et d'un dispositif de commande 102. Le bac à fiches 100 est un bac à fiches de type usuel dans lequel a été montée une plaquette 103 portant une série de lignes conductrices 104 parcourant la longueur du bac. La plaquette 103 peut être, comme représenté sur la figure 3, placée sur des supports prévus dans les faces avant et arrière internes du bac à fiches. Toutefois la plaquette 103 pourrait être soit intégrée, soit montée coulissante dans la paroi latérale du bac. Dans tous les cas, la plaquette 103 se termine par un connecteur 105 lui permettant d'être raccordée au dispositif de commande 102. Le dispositif de commande 102 peut être soit solidaire du bac, comme dans le mode de réalisation représenté, soit relié au bac par l'intermédiaire d'un cable. On peut aussi concevoir un dispositif de commande 102 toute-à-fait indépendant du bac, la transmission du signal s'effectuant sans fil. Il comprend, dans sa conception la plus simple, un clavier à touches 106 permettant d'entrer le code ou l'adresse du document recherché. Toutefois, le dispositif de commande peut comporter un certain nombre de touches de fonctions permettant d'effectuer diverses opérations telles que recherche de fiche, marquage d'une fiche, comptage du nombre de fiches, recherche des numéros absents. Le dispositif de commande peut aussi comporter un dispositif d'affichage tel qu'un dispositif d'affichage par cristaux liquides ou autres qui permet de visualiser le résultat des opérations. Selon un mode plus perfectionné de réalisation, le dispositif de commande peut être constitué par une unité programmable qui permet d'associer à chaque adresse de document la codification usuelle du service utilisateur.

Comme représenté de manière agrandie à la figure 4, les pochettes pour fiches destinées à être rangées dans le bac à fiches sont constituées par une pochette en matière transparente souple ou semi-rigide 110 destinée à recevoir la fiche ou la micro-fiche à classer. La pochette 110 est fixée à un élément support 111 muni de deux encoches 112, 113 pour suspendre la pochette dans le bac à fiches sur la plaquette 103 et sur un rail de guidage 103' prévu sur le côté opposé. L'élément support 111 porte un dispositif de repérage 114. Le dispositif de repérage 114 peut être constitué par un circuit imprimé portant sous forme d'un circuit intégré une logique de détection du type décrit ci-dessus. Le dispositif de repérage 114 est monté sur l'élément support 111 au niveau de l'encoche 113 et est connecté aux lignes conductrices de la plaquette par l'intermédiaire de contacts 115. Le dispositif de repérage est muni d'un voyant 116 qui permet de repérer immédiatement la fiche détectée. Bien entendu, le dispositif de repérage peut être positionné de différentes manières sur l'élément support en fonction de la forme du bac à fiches ou autres.

Il est évident pour l'homme de l'art que le système peut s'appliquer à la recherche de tous objets tels que des dossiers classés dans une armoire, des livres rangés sur des rayonnages, des pièces détachées placées sur des étagères, etc, la seule contrainte étant que le dispositif de repérage doit être solidaire ou au moins associé à l'objet.

## Revendications

1. Un système de recherche d'objets classés de façon aléatoire dans un dispositif de classement, lesdits objets étant munis d'un code de classification, caractérisé en ce qu'il comporte un dispositif d'adressage indépendant (1, 200 et 102) constitué par un dispositif d'entrée de données destiné à entrer le code de l'objet recherché par un dispositif émetteur adressant à tous les objets simultanément un signal correspondant au code de l'objet recherché et au moins un dispositif de repérage (10, 20, 70; 210, 220; 114) associé à chaque objet, chaque dispositif de repérage (10, 20, 70; 110) étant constitué par un dispositif mémoire (11, 21, 71; 213) dans lequel a été emmagasinée le code de l'objet et par un dispositif de comparaison (12, 22, 72; 214) pour comparer le code contenue à partir du signal émis par le dispositif d'adressage et émettre un signal commandant un dispositif de détection (13, 23, 73; 116; 215) solidaire de l'objet recherché.

2. Un système de recherche d'objets classés de façon aléatoire selon la revendication 1, caractérisé en ce que le dispositif mémoire (11, 21, 71; 213) est un dispositif mémoire programmable ou un dispositif mémoire seulement lu.

3. Un système de recherche d'objets classés de façon aléatoire selon la revendication 1, caractérisé en ce que le dispositif de repérage comporte de plus un dispositif récepteur (211, 212) susceptible de transformer le signal provenant du dispositif de commande en un code acceptable par le dispositif de comparaison.

4. Un système de recherche d'objets classés de façon aléatoire selon l'une quelconque des revendications 1 à 3, caractérisé en ce que le dispositif d'adressage est constitué par une unité programmable.

5. Un système de recherche d'objets classés de façon aléatoire selon l'une quelconque des revendications 1 à 3, caractérisé en ce que le dispositif d'adressage est constitué par un dispositif du type télécommande.

6. Un système de recherche d'objets classés de façon aléatoire selon l'une quelconque des revendications 1 à 5, caractérisé en ce que le dispositif d'adressage comporte un dispositif de marquage de type connu permettant d'inscrire un code dans le dispositif de repérage d'un nouvel objet.

7. Un système de recherche d'objets classés de façon aléatoire selon l'une quelconque des revendications 1 à 6, caractérisé en ce que le dispositif d'adressage est connecté à un dispositif mémoire dans lequel est emmagasinée une table de correspondance code utilisateur/code de l'objet pour permettre la recherche d'un objet à partir du code utilisateur.

8. Un système de recherche d'objets classés de façon aléatoire selon l'une quelconque des revendications 1 à 7, caractérisé en ce que le dispositif de détection (13, 23, 73; 215; 116) est constitué par un dispositif de visualisation tel qu'une diode électroluminescente, un cristal liquide ou des dispositifs semblables.

## Patentansprüche

1. System zur Ermittlung von wahlweise abgelegten Gegenständen in einer Sortiervorrichtung, wobei diese Gegenstände mit einem Sortiercode ausgestattet sind, dadurch gekennzeichnet, daß das System eine unabhängige Adressiervorrichtung (1, 200 und 102) aufweist, welche von einer Vorrichtung zur Eingabe von Daten gebildet ist, mittels welcher der Code des gesuchten Gegenstandes über einen Emitter eingegeben wird, der in alle Gegenstände gleichzeitig ein Signal einsteuert, welches dem Code des gesuchten Gegenstandes entspricht, daß zumindest eine Registriervorrichtung (10, 20, 70; 210, 220; 114) vorgesehen ist, welche einem jeden Gegenstand zugeordnet ist, daß eine jede Registriervorrichtung (10, 20, 70; 110) aus einer Speichervorrichtung (11, 21, 71; 213) gebildet ist, in welche der Code des Gegenstandes eingespeichert wurde und daß eine Vergleichsvorrichtung (12, 22, 72; 214) vorgesehen ist, um den Code des von der Adressiervorrichtung emittierten Signales zu vergleichen und ein Signal zu emittieren, welches eine mit dem zu recherchierenden Gegenstand verbundene Anzeigevorrichtung (13, 23, 73; 116; 215) steuert.

2. System nach Anspruch 1, dadurch gekennzeichnet, daß die Speichervorrichtung (11, 21, 71; 213) eine programmierbare Speichervorrichtung oder eine lediglich ablesbare Speichervorrichtung ist.

3. System zur Ermittlung von wahlweise abgelegten Gegenständen nach Anspruch 1, dadurch gekennzeichnet, daß die Registriervorrichtung darüber hinaus eine Empfängervorrichtung (211, 212) aufweist, welche das von der Steuervorrichtung kommende Signal in einen Code umwandelt, der von der Vergleichvorrichtung annehmbar ist.

4. System zur Ermittlung von wahlweise abgelegten Gegenständen nach einem der Ansprüche 1 bis 3, dadurch gekennzeichnet, daß die Adressiervorrichtung von einer programmierbaren Einheit gebildet ist.

5. System zur Ermittlung von wahlweise abgelegten Gegenständen nach einem der Ansprüche 1 bis 3, dadurch gekennzeichnet, daß die Adressiervorrichtung von einer ferngesteuerten Vorrichtung gebildet ist.

6. System zur Ermittlung von wahlweise abgelegten Gegenständen nach einem der Ansprüche 1 bis 5, dadurch gekennzeichnet, daß die Adressiervorrichtung eine an sich bekannte Aufzeichnungsvorrichtung ist, mittels welcher ein Code in die Vorrichtung zum Registrieren eines neuen Gegenstandes eingetragen wird.

7. System zur Ermittlung von wahlweise abgelegten Gegenständen nach einem der Ansprüche 1 bis 6, dadurch gekennzeichnet, daß die Adressiervorrichtung mit einer Speichervorrichtung verbunden ist, in welche ein Anwendungscode des Gegenstandes eingespeichert wird, um die Nachforschung nach dem Gegenstand über den Anwendungscode zu ermöglichen.

8. System zur Ermittlung von wahlweise abgelegten Gegenständen nach einem der Ansprüche 1 bis 7, dadurch gekennzeichnet, daß die Anzeigevorrichtung (13, 23, 73; 215; 116) aus einer Visualisierungsvorrichtung, z.B. einer elektrolumineszierenden Diode, einem flüssigen Kristall oder vergleichbaren Vorrichtungen besteht.

**Claims**

1. A system for the search for randomly classified objects in a classification device, said objects having a classification code, characterized in that it comprises an independant addressing device (1, 200 and 102) comprising a data input device to enter the code of the searched object through an emitter device addressing simultaneously to all the objects a signal corresponding to the code of the searched object and at least one locating device (10, 20, 70, 210, 220, 114) associated with each object, each locating device (10, 20, 70, 110) being comprised by a memory device (11, 21, 71, 213) wherein has been stored the code of the object, and by a comparison device (12, 22, 72, 214) to compare the code contained from the signal emitted by the addressing device and to emit a signal controlling a detection device (13, 23, 73, 116, 215) integral with the searched object.

2. A system for the search for randomly classified objects according to claim 1, characterized in that said memory device (11, 21, 71, 213) is a programmable memory device or a read-only memory device.

3. A system for the search for randomly classified objects according to claim 1, characterized in that said locating device also comprises a receiver device (211, 212) which is capable of transforming the signal coming from the control device into a code which is acceptable by the comparison device.

4. A system for the search for randomly classified objects according to any of claims 1 to 3, characterized in that the addressing device is a programmable unit.

5. A system for the search for randomly classified objects according to any of claims 1 to 3, characterized in that the addressing device is a device of the telecontrolled type.

6. A system for the search for randomly classified objects according to any of claims 1 to 5, characterized in that the addressing device comprises a marking device of a known type for the inscription of a code in the locating device of a new object.

7. A system for the search for randomly classified objects according to any of claims 1 to 6, characterized in that the addressing device is connected to a memory device wherein is stored a table of user code/code of the object correspondence, to allow the search for an object from the user code.

8. A system for the search for randomly classified objects according to any of claims 1 to 7, characterized in that the detection device (13, 23, 73, 215, 116) is a visible display device such as a light-emitting diode, a liquid crystal or similar devices.

*Fig.1*

*Fig.3*

*Fig.4*

0 027 074

Fig.2